# EUROPEAN PATENT SPECIFICATION

(11) **EP 1 779 627 B1**
(45) Date of publication and mention of the grant of the patent: **25.05.2016**
(21) Application number: 05731461.9
(22) Date of filing: 25.02.2005
(51) Int. Cl.: H04L 29/06

(54) **METHODS, DEVICES, SYSTEMS AND COMPUTER PROGRAM PRODUCTS FOR PROVIDING AVAILABILITY DATA ASSOCIATED WITH DATA FILES TO USERS OF A PRESENCE SERVICE**
VERFAHREN, EINRICHTUNGEN, SYSTEME UND COMPUTERPROGRAMMPRODUKTE ZUR BEREITSTELLUNG VON MIT DATEN-DATEIEN ASSOZIIERTEN VERFÜGBARKEITSDATEN FÜR BENUTZER EINES PRÄSENZDIENSTES
PROCEDES, DISPOSITIFS, SYSTEMES ET PROGICIELS DESTINES A FOURNIR A DES USAGERS D'UN SERVICE DE PRESENCE DES DONNEES DE DISPONIBILITE ASSOCIEES A DES FICHIERS DE DONNEES

(30) Priority: 19.08.2004 US 921440
(43) Date of publication of application: 02.05.2007
(73) Proprietor: Sony Ericsson Mobile Communications AB, 221 88 Lund (SE)
(72) Inventor: HOMILLER, Daniel P., Cary, North Carolina 27513 (US)
(74) Representative: Chamberlain, Alan James
(86) International application number: PCT/US2005/006274
(87) International publication number: WO 2006/022842

(56) References cited:
- EP-A- 1 324 579
- EP-A- 1 372 314
- WO-A-02/43351

## Description

### BACKGROUND OF THE INVENTION

The present invention relates to data communications and, more particularly, to methods, devices, systems and computer program products for communicating availability data between devices.

Recently, Internet-based instant messaging applications have become popular for use in communication with selected other users without the delays associated with conventional electronic mail. In a typical instant messaging application, for example, AOL Instant Messenger, a user prepares a message for delivery to one or more other users, typically on a so-called "buddy list," and transmits the message for delivery. The user receives messages from members of the buddy list in a similar manner. Users are generally identified by one or more "screen names."

Instant messaging is generally based on the availability of a potential message recipient. Unlike email in which message delivery and response delays are customary, instant messaging is based on immediate response, and it is generally undesirable to send instant messages to a user who receives the messages hours or days later. Thus, applications capable of indicating status or presence of a user online have been developed, for example, applications, such as Instant Messaging and Presence (IM&P) services.

Users are typically connected to the Internet using computers, personal digital assistants (PDAs), web enabled mobile terminals or similar devices, and are allocated either a fixed internet protocol (IP) address or a dynamic IP address, *i.e.,* an IP address assigned by the internet service provider (ISP). A first user of the IM&P services may register his presence with a presence server using the Internet by sending his user identification (which may be the same as his screen name) and IP address to the presence server, thereby making his presence information available to other users, for example, subscribers. The first user may also be a subscriber and subscribe to the presence of second and third users. Thus, the presence server may inform the first user of the status or presence of the second and third users. For presence with the presence server, making his presence information available to all other users who are subscribed to the second user's presence. When the second user logs on, all of the users subscribed to the second user's presence, including the first user, may receive a notification that the second user has logged on. The presence of the first, second and third user's may be depicted on a display at the devices being used by the first, second and third users. For example, a "buddy list" may include a combination of screen names and icons, the presence of which on the display may indicate a user's presence online. Furthermore, the "buddy list" may also include an indication of the user's availability, for example, available, unavailable, busy, and the like. Details of types of presence services are discussed in, for example, European Application No. EP 1 342 579 and EP 1 372 314.

Many standards for instant messaging and presence applications have recently been developed responsive to the increased use of such services. For example, the Wireless Village Standard and the Instant Messaging and Presence Standard (IMPS) have been developed to extend instant messaging and presence capabilities to portable electronic devices.

### SUMMERY OF THE INVENTION

Some embodiments of the present invention provide method, devices and computer program products for providing availability data. Availability data associated with a data file stored at a first client device is provided to a presence server. The presence server is configured to provide the availability data to at least one subscriber of a presence service provided by the presence server and to alter an availability indicator associated with the data file on a display of at least one second client device associated with the at least one subscriber.

In further embodiments of the present invention, the availability indicator may be visually associated with a user. The association between the availability indicator and the user may be depicted on the display of the at least one second client device. The availability data associated with the data file may be may be independent from an availability status of the user associated with the data file. In certain embodiments of the present invention, the data file may include a text file, at least one image and/or a live or recorded video. The availability data may include an indication that the data file is available, unavailable, new, recording and/or updated.

Still further embodiments of the present invention provide methods, devices

Still further embodiments of the present invention provide methods, devices and computer program products for receiving availability data. Availability data associated with a data file stored at a second client device is requested from a first client device associated with a user of a presence service provided by a presence server. The data file is associated with an availability indicator to be displayed at the first client device. The requested availability data is received at the first client device. The availability indicator is updated responsive to the received availability data to visually indicate a current status of the data file on a display at the first client device.

In some embodiments of the present invention, the data file may be associated with a second user of the second client device and the requested availability data may be received independently of an availability status of the second user. The request may include subscribing to a presence service at a presence server so as to allow the second client device to receive availability data each time the status of the data file is updated at the presence server. In certain embodiments of the present invention, the request may include polling a presence server for current availability data associated with the data file at the first client device.

Further embodiments of the present invention provide methods, systems and computer program products for providing availability data. Availability data associated with a data file stored on a first client device is received at a presence server. The data file is associated with an availability indicator configured to be displayed on one or more second client devices. The received availability data is stored at the presence server and the stored availability data is distributed to the one or more second client devices. The availability indicator associated with the data file is configured to indicate a status of the data file on a display at the second client device.

In still further embodiments of the present invention, an availability data update associated with the data file may be received at the presence server and distributed to the one or more second client devices. The availability indicator may be configured to indicate a change in status of the data file.

In some embodiments of the present invention, a request for the availability data may be received from the one or more second client devices. The one or more second client devices may be authenticated and the stored availability data may be distributed to the one or more second client devices if the at least one second client device has been authenticated. In certain embodiments of the present invention, information associated with the one or more second client devices may be stored at the presence server. The one or more second client devices may be authenticated based on the stored information associated with the one or more second client devices.

### BRIEF DESCRIPTION OF THE DRAWINGS

**Figure 1A** is a schematic diagram of mobile terminals according to some embodiments of the present invention and an exemplary base station transceiver.
**Figure 1B** is a schematic diagram of providing mobile terminals according to some embodiments of the present invention and an exemplary base station transceiver.
**Figure 1C** is a schematic diagram of subscribing or receiving mobile terminals according to some embodiments of the present invention and an exemplary base station transceiver.
**Figure 2** is an exemplary "buddy list" including icons for data files according to some embodiments of the present invention.
**Figure 3** is a block diagram illustrating systems according to some embodiments of the present invention.
**Figure 4** is a flowchart illustrating operations of devices according to some embodiments of the present invention.
**Figure 5** is a flowchart illustrating operations of devices according to further embodiments of the present invention.
**Figure 6** is a flowchart illustrating operations of presence servers according to some embodiments of the present invention.
**Figure 7** is a flowchart illustrating operations of presence servers according to further embodiments of the present invention.

### DETAILED DESCRIPTION

The present invention now will be described more fully hereinafter with reference to the accompanying drawings, in which illustrative embodiments of the invention are shown. In the drawings, the relative sizes of regions or features may be exaggerated for clarity. This invention may, however, be embodied in many different forms and should not be construed as limited to the embodiments set forth herein; rather, these embodiments are provided so that this disclosure will be thorough and complete, and will fully convey the scope of the invention to those skilled in the art. It will be understood that when an element is referred to as being "coupled" or "connected" to another element, it can be directly coupled or connected to the other element or intervening elements may also be present. In contrast, when an element is referred to as being "directly coupled" or "directly connected" to another element, there are no intervening elements present. Like numbers refer to like elements throughout. As used herein the term "and/or" includes any and all combinations of one or more of the associated listed items.

It will be understood that, although the terms first, second, etc. may be used herein to describe various elements, these elements should not be limited by these terms. These terms are only used to distinguish one element from another element. Thus, a first element discussed below could be termed a second element without departing from the teachings of the present invention.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As will be appreciated by one of skill in the art, the present invention may be embodied as a method, device, system or computer program product. Accordingly, the present invention may take the form of an entirely hardware embodiment, an entirely software embodiment or an embodiment combining software and hardware aspects all generally referred to herein as a "circuit" or "module." Furthermore, the present invention may take the form of a computer program product on a computer-usable storage medium having computer-usable program code embodied in the medium. Any suitable computer readable medium may be utilized including hard disks, CD-ROMs, optical storage devices, a transmission media such as those supporting the Internet or an intranet, or magnetic storage devices.

Computer program code for carrying out operations of the present invention may be written in an object oriented programming language such as Java®, Smalltalk or C++. However, the computer program code for carrying out operations of the present invention may also be written in conventional procedural programming languages, such as the "C" programming language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

The present invention is described in part below with reference to flow chart illustrations and/or block diagrams of methods, systems, devices and computer program products according to embodiments of the invention. It will be understood that each block of the flow chart illustrations and/or block diagrams, and combinations of blocks in the flow chart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flow chart and/or block diagram block or blocks.

These computer program instructions may also be stored in a computer-readable memory that can direct a computer or other programmable data processing apparatus to function in a particular manner, such that the instructions stored in the computer-readable memory produce an article of manufacture including instruction means which implement the function/act specified in the flow chart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flow chart and/or block diagram block or blocks.

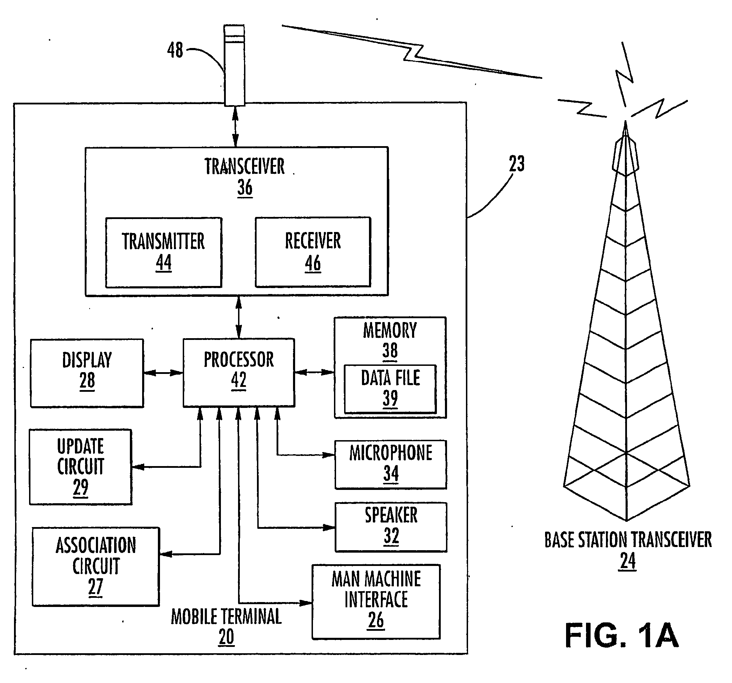

Exemplary embodiments of the present invention will now be described below with respect to Figures 1A through 7. Embodiments of the present invention provide methods, systems, devices and computer program products for providing and/or receiving availability data, *i.e.,* presence information, associated with a data file. The availability data may indicate a communications state of the data file, for example, available, unavailable, recording, and the like. Devices, for example, portable electronic devices, may be configured to provide and/or receive availability data to and/or from a presence server. The presence server may be configured to receive the availability data and provide the availability data associated with the data file to remote devices that either subscribe (subscribers) to a presence service provided by the presence server that allows access to availability data associated with the data file or request availability data from the presence service. Accordingly, some embodiments of the present invention may allow availability data associated with a data file to be shared by users of a presence service, in contrast to conventional presence services, which typically only support sharing of availability data associated with users.

As used herein, "availability data" or "presence information" refers to information related to the communication state of a data file stored at a client device. For example, the availability data may indicate that the data file is unavailable, available, recording (if live video), new, updated and the like. According to some embodiments of the present invention, subscribers of a presence service provided by a presence server may have access to this availability data associated with the data file as discussed further herein.

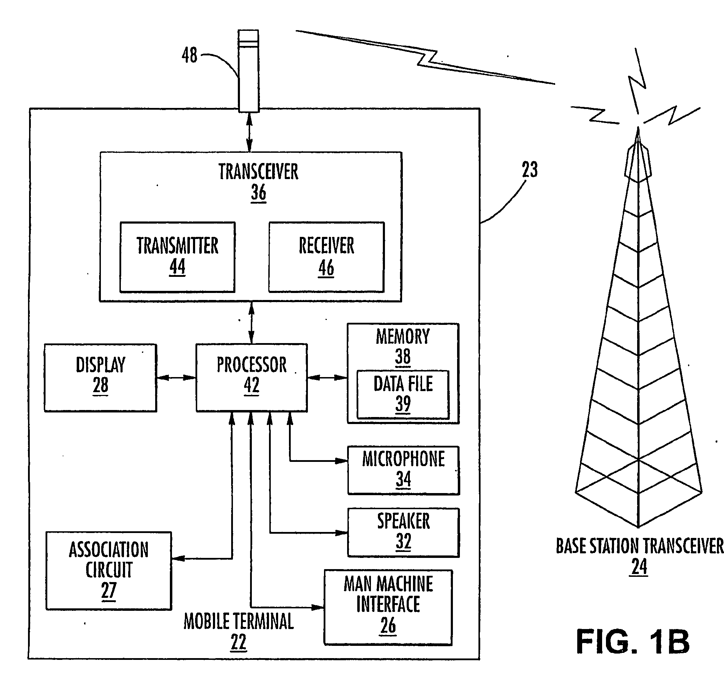

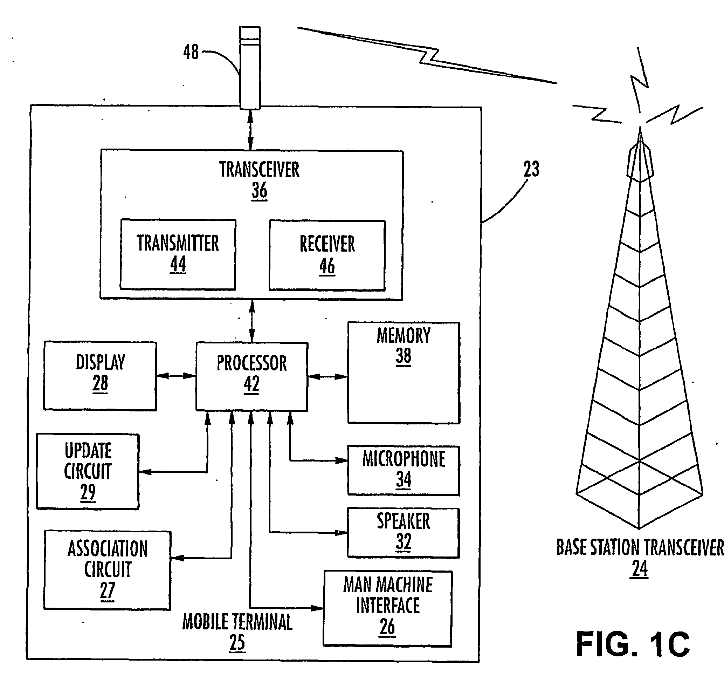

The present invention is described below with reference to schematic and block diagrams of mobile terminals including circuits according to some embodiments of the present invention. Although embodiments of the present invention are discussed herein as being included as part of a mobile terminal, for example, mobile terminals **20, 22** and **25** of **Figures 1A****,** **1B** and **1C****,** respectively, embodiments of the present invention are not limited to this configuration. Embodiments of the present invention may be included in any wired or wireless device capable of communicating over the Internet without departing from the scope of the present invention.

Embodiments of the present invention may include mobile terminals having the functionality of providing and receiving availability data associated with a data file, just providing availability data associated with the file and/or just receiving availability data associated with the data file without departing from the scope of the present invention. In particular, an exemplary mobile terminal 20 that may be configured to both provide and receive availability data is illustrated in Figure 1A. An exemplary providing mobile terminal 22 is illustrated in Figure 1B. As used herein, a "providing portable electronic device" or "providing mobile terminal" refers to a portable electronic device having a data file in accordance with embodiments of the present invention stored thereon and that provides availability data associated with the data file to one or more presence servers. Furthermore, an exemplary receiving or subscribing mobile terminal **25** is illustrated in **Figure 1C****.** As further used herein, a "receiving portable electronic device(s)" or "receiving mobile terminal(s)" refers to a portable electronic device that receives availability data associated with the data file stored on one or more providing portable electronic devices. Thus, as discussed above, it will be understood that portable electronic devices according to embodiments of the present invention may be configured to provide availability data associated with a data file, such as providing mobile terminal **22** of Figure **1B****,** receive availability data, such as receiving mobile terminal **25** of Figure **1C****,** or both provide and receive availability data such as mobile terminal **20** of **Figure 1A** without departing from the scope of the present invention.

Features contained in all of the mobile terminals **20,22** and **25** of **Figures 1A****,** **1B** and **1C****,** respectively, will be discussed with respect to **Figure 1A** and features specific to the providing and/or receiving mobile terminals **22** and **25,** respectively, will be discussed with respect to **Figures 1B** and **1C****,** respectively. **Figure 1A** illustrates an exemplary wireless communication system in accordance with embodiments of the present invention, which includes the mobile terminal **20** and a base station transceiver **24** of a wireless communications network. The mobile terminal **20** includes a portable housing **23** and may include a man machine interface **26,** a display **28,** a speaker **32,** a microphone **34,** a transceiver **36,** and a memory **38,** any of which may be connected to a processor **42.** Furthermore, a mobile terminal **20** according to various embodiments of the present invention may further include an association circuit **27** and/or an update circuit **29,** either or both of which are also connected to a controller/processor **42.** The processor **42** can be any commercially available or custom microprocessor.

The transceiver **36** typically includes a transmitter circuit **44** and a receiver circuit **46,** which respectively transmit outgoing radio frequency signals to the base station transceiver **24** and receive incoming radio frequency signals, such as voice signals and/or data signals, from the base station transceiver **24** via an antenna **48.** The antenna **48** may be an embedded antenna, a retractable antenna or any antenna known to those having skill in the art without departing from the scope of the present invention. The radio frequency signals transmitted between the mobile terminal **22** and the base station transceiver **24** may comprise both traffic and control signals (*e.g.*, paging signals/messages for incoming calls), which are used to establish and maintain communication with another party or destination. The processor **42** may support various functions of the mobile terminal **22,** including Internet applications and communications.

As used herein, the term "portable electronic device" or "mobile terminal" may include: a cellular radiotelephone with or without a multi-line display; a Personal Communications System (PCS) terminal that may combine a cellular radiotelephone with data processing, facsimile and data communications capabilities; a Personal Digital Assistant (PDA) that can include a radiotelephone, pager, Intemet/intranet access, Web browser, organizer, calendar and/or a global positioning system (GPS) receiver; a gaming device, an audio video player, and a conventional laptop and/or palmtop portable computer that may include a radiotelephone transceiver.

In some embodiments of the present invention, the base station transceiver **24** comprises the radio transceiver(s) that defines an individual cell in a cellular network and communicates with the mobile terminal **22** and other mobile terminals in the cell using a radio-link protocol. Although only a single base station transceiver **24** is shown, it will be understood that many base station transceivers may be connected through, for example, a mobile switching center and other devices to define a wireless communications network.

Although the present invention may be embodied in communication devices or systems, such as the mobile terminal **22,** the present invention is not limited to such devices and/or systems. Instead, the present invention may be embodied in any apparatus that is capable of communicating over the Internet according to embodiments of the present invention.

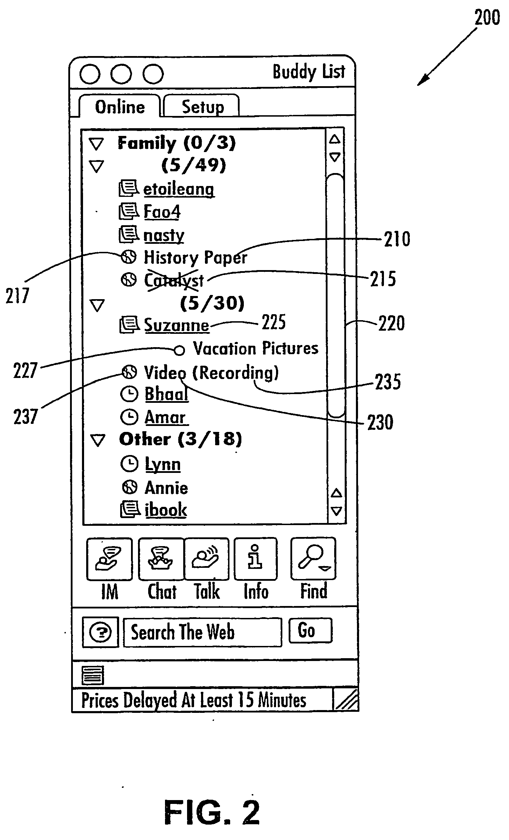

In some embodiments of the present invention, the association circuit **27 (****Figures 1A****,** **1B** **and** **1C****)** is configured to associate a data file **39,** for example, a text file, an image, recorded or live video, with an availability indicator. For example, if the text file were a term paper written for a history class, the availability indicator may be an icon depicting Lincoln's head. Alternatively, as illustrated in **Figure 2****,** the availability indicator may also be a text string, for example, HISTORYPAPER **210** and/or an associated icon **217.** The text string may be similar to a screen name **205** used to identify a user.

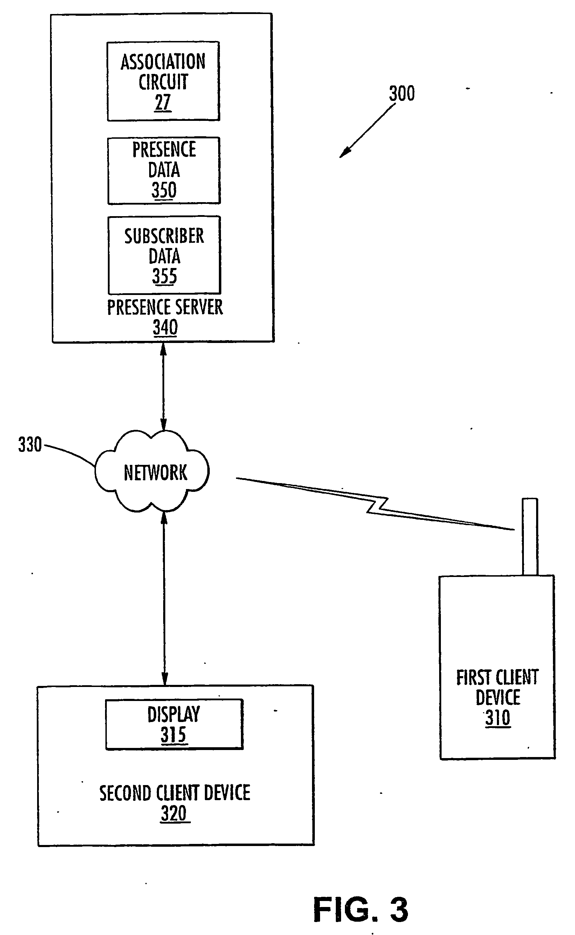

It will be understood that the association of the data file **39** with an availability indicator may be performed at the providing mobile terminal **22,** the receiving mobile terminal 25 and/or a presence server **340** **Figure 3****.** As illustrated in **Figures 1A****,** **1B****,** **1C** and **3****,** the mobile terminals **20, 22, 25** and the presence server **340** may all include an association circuit **27,** which may be configured to associate the data file with an availability indicator. It will be understood that the association circuit **27** is optional and may be removed from the devices that are not configured to perform the association according to embodiments of the present invention.

According to some embodiments of the present invention, the availability indicator may be configured to indicate availability data, *i.e.,* presence information, associated with the data file **39.** For example, if the availability indicator is present on a display of a receiving device **25,** remote from the providing device 22, this may indicate that the data file **39** is available to be viewed and/or heard. If, on the other hand, the availability indicator is present on the display of the receiving device **25,** but has an X through it, as illustrated by Catalyst **215** of **Figure** 2, this may indicate that the data file **39** is unavailable. Furthermore, icons, for example, icons **217,227** and **237** associated with text string availability indicators HISTORYPAPER **210,** Vacation Pictures **220** and Video **230,** respectively, may be used to indicate availability data with respect to the respective data files. For example, the icon **217** associated with HISTORYPAPER **210** may indicate if the paper is available, unavailable, updated, new and the like. It will be understood that the indication of status may be performed using various techniques known to those having skill in the art without departing from the scope of the present invention. For example, as illustrated in **Figure 2****,** the status of the video **230** is indicated as recording **235** in parentheses next to the availability indicator. In some embodiments of the present invention, the availability indicator of the data file **39** may be visually associated with a user of the device on which the data file is stored. For example, the availability indicator Vacation Pictures **220** data file is visually associated with a user, Suzanne 225. It will be understood that the user, Suzanne **225,** may be logged off or otherwise unavailable and the Vacation Pictures **220** data file may still be available. Similarly, Suzanne **225** may be logged on and available and the Vacation Pictures **220** data file may be unavailable.

Referring again to **Figures 1A** and **1C****,** the update circuit **29** of the receiving mobile terminals **22** and/or **25** may be configured to update the availability indicator associated with the data file **39** responsive to received availability data. For example, the availability indicator may indicate that the data file **39** is available. When the data file **39** is no longer available, for example, when more pictures are being added to the Vacation Pictures **220** data file, the availability indicator may be changed to indicate the unavailability of the data file. Alternatively, the availability indicator may be removed from the display of the receiving device **25,** which may also indicate the unavailability of the data file. In some embodiments of the present invention, the receiving device **25** may receive a notification that the data file is unavailable and the update circuit **29** may be configured to change the availability indicator associated with the data file **39** to indicate that the data file **39** is no longer available.

It will be understood that although the association circuit **27** and/or the update circuit **29** are illustrated in **Figures 1A****,** **1B** and 1C as being present in mobile terminals **20, 22** and **25,** embodiments of the present invention are not limited to this configuration. For example, in some embodiments of the present invention, the association circuit **27** and the update **circuit 29** may be included in a presence server configured to communicate with mobile terminals **20, 22** and **25** and other devices according to some embodiments of the present invention, which will be discussed further with respect to **Figure 3****.**

**Figure 3** illustrates an exemplary system **300** according to embodiments of the present invention. As illustrated, the system **300** may include first and second client devices **310** and **320,** a network 330 and a presence server **340.** It will be understood that the first and second client devices **310** and **320** and/or the presence server **340** may include association circuits **27** and/or update circuits **29** according to embodiments of the present invention as discussed with respect to **Figure 1****.** Furthermore, the data file **39** may be stored at the first client device **310** and/or second client device **320.**

The first and second client devices **310** and **320** may each be, for example, a laptop computer, a desktop computer, a personal digital assistant (PDA), a web capable mobile terminal or any device capable of communicating with the network **330.** The first and second client devices **310** and **320** may communicate over the network **330,** for example, the Internet, through a telephone line, a digital subscriber link (DSL), a broadband cable link, a wireless link or the like. The presence server **340** may also communicate over the network **330.** Thus, the network 330 may convey data between the first and second client devices **310** and **320** and the presence server **340.**

Exemplary operations of the present invention will now be discussed with respect to **Figure 3****.** The first client device **310** may be a camera phone (*i.e.,* a mobile telephone with an integrated or attached digital camera), which may include one or more data files stored in a memory thereof, for example, a directory of photos may be stored in the memory of the camera phone **310.** The directory of photos (data file 39 of **Figure 1****)** may be associated with an availability indicator. For example, Vacation Pictures **220 (****Figure 2****)** may be the availability indicator representing the directory of photos in the memory of the camera phone **310.** The association of the directory of photos and the availability indicator Vacation Pictures **220** may be performed at the camera phone **310,** the second device **320** or at the presence server **340.** In particular, a user of the camera phone **310** may subscribe to a presence service offered by the presence server 340, and the data file, *i.e.,* the directory of photos, may be associated with the availability indicator using the presence service. The camera phone **310** may provide availability data about the directory of photos to the presence server **340** and the presence server **340** may store the availability data **350** at the presence server **340.**

A user of the second client device **320** may also subscribe the presence service. The presence server may store subscriber data **355** with respect to one or more subscribing devices. Thus, the user of the second client device **320** may request availability data from the presence server **340** about the data file associated with the availability indicator Vacation Pictures **220.** The presence server **340** may provide the requested availability data to the second client device **320** by altering the availability indicator associated with the data file, Vacation Pictures **220** in this example, on a display **315** at the second client device **310.** As discussed above, the availability indicator may be altered using many techniques known to those having skill in the art without departing from the scope of the present invention. For example, as illustrated in **Figure 2****,** the status of Video **230** is indicated as recording **235** in parentheses. The availability indicator may be altered by the presence server **340** or by the second client device 320, utilizing availability data provided by the presence server **340.**

It will be understood that the second client device **320** may receive continuous updates on the status of the data file if the second client device **320** specifically requests to receive such information, for example, if the second client device **320** subscribes to the data file associated with the availability indicator Vacation Pictures **220** in this example. If the second client device **320** does not subscribe to the data file, the second client device **320** can still obtain availability data associated with a data file by, for example, querying or polling the presence server **340** for the availability data **350.** In some embodiments of the present invention, the second client device **320** may be authenticated by the presence server **340** before the availability data **350** is provided to the second client device **320.** The subscriber data **355** may be used to authenticate the requesting device.

As illustrated in **Figure 2****,** the availability indicator, Vacation Pictures **220** in this example, may be further associated with a user, Suzanne **225,** of the camera phone **310** on which the data file associated with the availability indicator Vacation Pictures **220** is stored. However, it will be understood that the status of the user, Suzanne **225,** is distinct from the status of the data file associated with the availability indicator Vacation Pictures **220.** For example, the user of the camera phone **310** may be taking a nap and, therefore, have an unavailable status, while the status of the directory of photos associated with Vacation Pictures **220,** is still available. Accordingly, a user of the second client device **320** may act upon the availability indicator, Vacation Pictures **220,** if indicated as available, and access and view the directory of photos associated with Vacation Pictures **220** even when the user of the camera phone **320** is unavailable. Accordingly, some embodiments of the present invention may provide methods of providing data files located at remote devices that may allow users of the remote devices to view the data stored in the data files at their leisure.

In other embodiments of the present invention, the data file may be a video. The video may be a pre-recorded video or a live video. The video may be assigned an availability indicator, for example, Video **230 (****Figure 2****).** Thus, users of remote devices may click on icon **237** associated with the availability indicator Video 230 and view the video at any time. This could also be useful for video conferencing as the initial connection set-up for conventional video conferencing would not be required. A participant in the videoconference would just click on the icon **237** associated with the availability indicator Video **230** to participate.

It will be understood that the data files, the directory of photos (associated with Vacation Pictures **220)** in this example, do not have to be stored on the camera phone **310.** For example, the data files may be stored on the hard drive of a desktop computer. The camera phone **310** may be configured to communicate with the desktop computer using, for example, a Bluetooth or a wireless local area network (LAN) connection. Thus, the data files may only be available when the camera phone **310** is within range of the desktop computer. When the camera phone is within range, the availability indicator may indicate the availability of the data files. Similarly, when the camera phone **310** is not within range, the availability indicator may indicate the unavailability of the data file.

It will be understood that embodiments of the present invention discussed with respect to **Figure 3** are provided for exemplary purposes only and embodiments of the present invention are not limited to this configuration. For example, although **Figure 3** only includes first and second client devices **310** and **320,** three or more client devices may be coupled to the network without departing from the scope of the present invention.

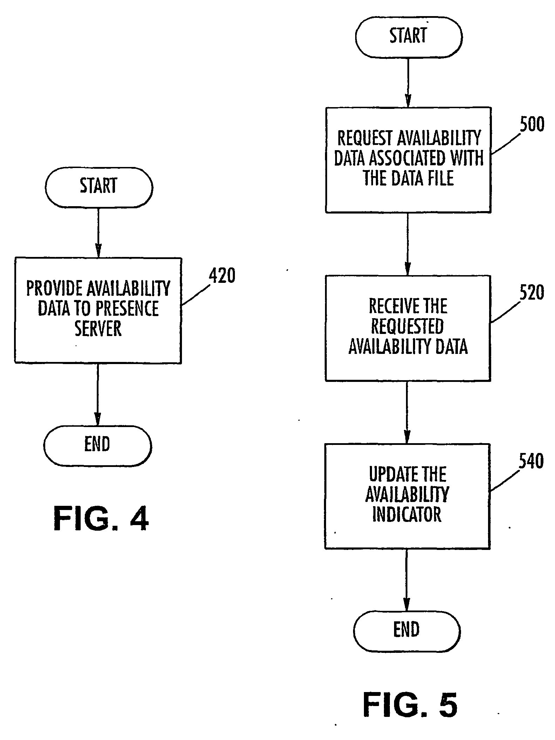

Referring now to **Figure 4****,** operations of devices according to some embodiments of the present invention will be discussed. Operations begin at block **420** by providing availability data associated with a data file stored at a first client device to a presence server. The presence server may be configured to provide the availability data to at least one subscriber of a presence service provided by the presence server and alter an availability indicator associated with the data file on a display of at least one second client device associated with the at least one subscriber. The data file may include, for example, a text file, an image and/or a live or recorded video. In some embodiments of the present invention, the availability .indicator may be an icon that can be displayed on the display of one or more second client devices. In some embodiments of the present invention, the icon may be visually associated with a user of the first client device. This association may be evident on the display of the second client device as illustrated by the availability indicator Vacation Pictures **220** of **Figure 2****.** The availability data related to the availability status of the data file may be provided independently of an availability status of the user. The availability data may be an indication that the data file is available, unavailable, new, recording, updated or the like.

As discussed above, it will be understood that the association of the data file with the availability indicator may be performed by a providing device, a receiving device and/or a presence server without departing from the scope of the present invention. For example, a user of a providing device may subscribe to a presence service provided by the presence server and the presence server may actually associate the data file with an availability indicator to be displayed on a display of the receiving device(s).

Operations of devices according to further embodiments of the present invention will now be discussed with respect to Figure 5. Operations begin at block 500 by requesting, at a first client device associated with a user of a presence service provided by a presence server, availability data associated with a data file stored at a second client device. The data file may be associated with an availability indicator to be displayed at the first client device. The availability data may be requested by, for example, subscribing to a presence service at a presence server so as to allow the first client device to receive availability data each time the status of the data file is updated. Alternatively, the availability data may be requested by, for example, polling a presence server for current availability data associated with the data file at the second client device. The requested availability data may be received at the first client device (block **520**). The availability indicator may be updated responsive to the received availability data to visually indicate a current status of the data file on a display of the first client device (block **540**)**.**

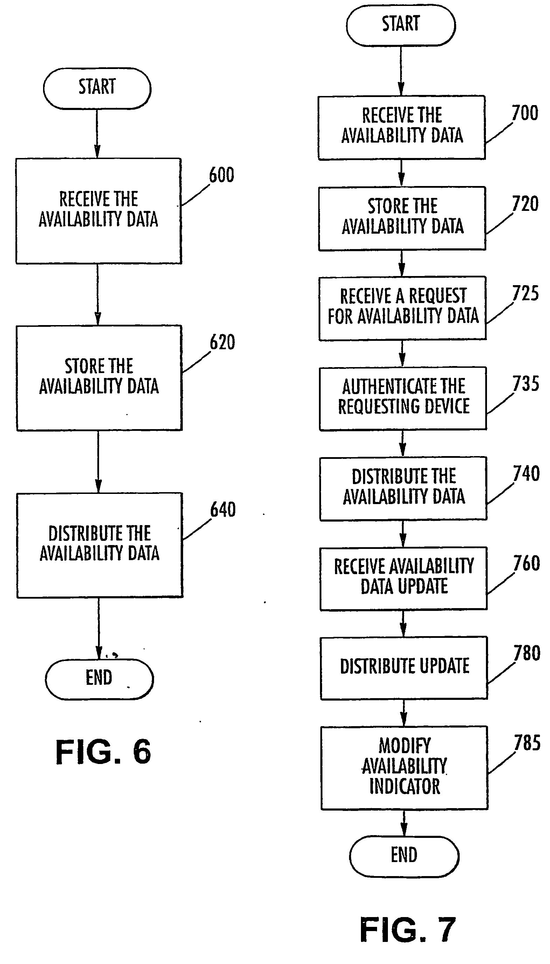

Operations of a presence server according to some embodiments of the present invention will now be discussed with respect to **Figure 6****.** Operations begin at block **600** by receiving, at a presence server, availability data associated with a data file stored on a first client device. The data file may have an associated availability indicator configured to be displayed on one or more second client devices. The received availability data may be stored at the presence server (block 620). The stored availability data may be distributed to the one or more second client devices (block **640**). The availability indicator associated with the data file may be configured to indicate the status of the data file on a display at the second client device.

Operations of a presence server according to further embodiments of the present invention will now be discussed with respect to **Figure 7****.** Operations begin at block **700** by receiving, at a presence server, availability data associated with a data file stored on a first client device. The data file may have an associated availability indicator configured to be displayed on one or more second client devices. The received availability data may be stored at the presence server (block **720**).

A request for availability data may be received from the one or more second client devices (block **725**). The requesting device may be authenticated at the presence server (block **735**). Once authenticated, the availability data may be distributed to the one or more second client devices (block **740**). An availability data update associated with the data file may be received at the presence server (block **760**). The availability data update may be distributed to the one or more second client devices (block **780**). The availability indicator may be configured to indicate a change in status of the data file (block **785**).

It will be understood that the circuits and other means supported by each block and combinations of blocks can be implemented by special purpose hardware, software or firmware operating on special or general purpose data processors, or combinations thereof. It should also be noted that, in some alternative implementations, the operations noted in the blocks may occur out of the order noted in the figures. For example, two blocks shown in succession may, in fact, be executed substantially concurrently, or the blocks may sometimes be executed in the reverse order.

The foregoing is illustrative of the present invention and is not to be construed as limiting thereof. Although a few exemplary embodiments of this invention have been described, those skilled in the art will readily appreciate that many modifications are possible in the exemplary embodiments without materially departing from the novel teachings and advantages of this invention. Accordingly, all such modifications are intended to be included within the scope of this invention as defined in the claims. In the claims, means-plus-function clauses are intended to cover the structures described herein as performing the recited function and not only structural equivalents but also equivalent structures. Therefore, it is to be understood that the foregoing is illustrative of the present invention and is not to be construed as limited to the specific embodiments disclosed, and that modifications to the disclosed embodiments, as well as other embodiments, are intended to be included within the scope of the appended claims. The invention is defined by the following claims, with equivalents of the claims to be included therein.

## Claims

1. A method of providing availability data, comprising:
receiving, at a presence server (340), availability data associated with a data file stored on a first client device (310), the data file having an associated availability indicator configured to be displayed on at least one second client device (320);
storing the received availability data at the presence server (340); and
distributing the stored availability data to the at least one second client device (320), the availability indicator associated with the data file being configured to indicate a status of the data file on a display (315) at the second client device (320).

2. The method of Claim 1, further comprising:
receiving, at the presence server (340), an availability data update associated with the data file; and
distributing the availability data update to the at least one second client device (320), wherein the availability indicator is configured to indicate a change in status of the data file.

3. The method of Claim 1, wherein storing is followed by:
receiving a request, from the at least one second client device (320), for the availability data; and
authenticating the at least one second client device (320), wherein distributing further comprises distributing the stored availability data to the at least one second client device (320) if the at least one second client device (320) has been authenticated.

4. The method of Claim 3, further comprising storing, at the presence server (340), information associated with the at least one second client device (320), wherein authenticating further comprises authenticating the at least one second client device (320) based on the stored information associated with the at least one second client device (320).

5. A method of providing availability data, comprising:
providing, to a presence server (340), availability data associated with a data file stored at a first client device (310), the presence server (340) being configured to provide the availability data to at least one subscriber of a presence service provided by the presence server (340) and alter an availability indicator associated with the data file on a display of at least one second client device (320) associated with the at least one subscriber.

6. The method of Claim 5, further comprising visually associating the availability indicator with a user, the association between the availability indicator and the user being depicted on the display (315) of the at least one second client device (320).

7. The method of Claim 6, wherein providing further comprises providing the availability data related to the availability status of the data file independently of an availability status of the user.

8. The method of Claim 5, wherein the data file comprises a text file, at least one image and/or a live or recorded video.

9. The method of Claim 5, wherein the availability data comprises an indication that the data file is available, unavailable, new, recording and/or updated.

10. A method of receiving availability data, comprising:
requesting, at a second client device (320) associated with a user of a presence service provided by a presence server, availability data associated with a data file stored at a first client device (310), the data file being associated with an availability indicator to be displayed at the second client device (320);
receiving the requested availability data at the second client device (320) from the presence server (340); and
updating the availability indicator associated with the data file responsive to the received availability data to visually indicate a current status of the data file on the display (315) at the second client device (320).

11. The method of Claim 10, wherein the user comprises a second user, wherein the data file is associated with a first user of the first client device (310) and wherein receiving the requested availability data further comprises receiving the requested availability data independently of an availability status of the first user.

12. The method of Claim 10, wherein requesting comprises subscribing to a presence service at the presence server (340) so as to allow the second client device (320) to receive availability data each time a status of the data file is updated.

13. The method of Claim 10, wherein requesting comprises polling the presence server (340) for current availability data associated with the data file at the first client device (310).

14. The method of Claim 10, wherein the data file comprises a text file, at least one image and/or a live or recorded video.

15. The method of Claim 10, wherein the availability data comprises an indication that the data file is available, unavailable, new, recording and/or updated.

16. A system (300) for providing availability data, comprising:
a presence server (340) configured to receive availability data associated with a data file stored on a first client device (310), the data file having an associated availability indicator configured to be displayed on at least one second client device (320), store the received availability data and distribute the stored availability data to the at least one second client device (320), the availability indicator associated with the data file being configured to indicate a status of the data file.

17. The system (300) of Claim 16, wherein the presence server (340) is further configured to receive an availability data update associated with the data file and distribute the update to the at least one second client device (320).

18. The system (300) of Claim 16, wherein the presence server (340) is further configured to receive a request, from the at least one second client device (320), for the availability data, authenticate the at least one second client device (320) and distribute the stored availability data to the at least one second client device (320) if the at least one second client device (320) has been authenticated.

19. The system (300) of Claim 16, wherein the presence server (340) is further configured to store information associated with the at least one second client device (320) and authenticate the at least one second client device (320) based on the stored information associated with the at least one second client device (320).

20. A first client device (310) configured to provide availability data, comprising:
a transmitter configured to transmit availability data associated with a data file stored at the first client device (310) to a presence server (340), the presence server (340) being configured to provide the availability data to at least one subscriber of a presence service provided by the presence server (340) and alter an availability indicator associated with the data file on a display of at least one remote second client device (320) associated with the at least one subscriber.

21. The first client device (310) of Claim 20, wherein the transmitter is further configured to transmit the availability data related to the availability status of the data file independent of an availability status of a user of the first client device (310).

22. The first client device (310) of Claim 20, wherein the first client device (310) comprises a portable electronic device.

23. A second client device (320) configured to receive availability data, comprising:
a transmitter circuit configured to request availability data associated with a data file stored at a remote device (310) associated with a user of a presence service provided by a presence server (340), the data file being associated with an availability indicator to be displayed at the second client device (320);
a receiver circuit configured to receive the requested availability data at the second client device (320) from the presence server (340); and
an update circuit configured to update the availability indicator associated with the data file responsive to the received availability data to visually indicate a current status of the data file on a display (315) of the second client device (320).

24. The second client device (320) of Claim 23, wherein the second client device (320) comprises a portable electronic device.

25. A computer program product for providing availability data, the computer program product comprising:
a computer readable storage medium having computer readable program code embodied in said medium, said computer readable program code comprising:
computer readable program code configured to receive, at a presence server (340), availability data associated with a data file stored on a first client device (310), the data file having an associated availability indicator configured to be displayed on at least one second client device (320);
computer readable program code configured to store the received availability data at the presence server (340); and
computer readable program code configured to distribute the stored availability data to the at least one second client device (320), the availability indicator associated with the data file being configured to indicate the change in status of the data file.

26. A computer program product for providing availability data, the computer program product comprising:
a computer readable storage medium having computer readable program code embodied in said medium, said computer readable program code comprising:
computer readable program code configured to provide availability data associated with a data file stored at a first client device (310) to a presence server (340), the presence server (340) being configured to provide the availability data to at least one subscriber of a presence service provided by the presence server (340) and alter an availability indicator associated with the data file on a display of at least one second client device (320) associated with the at least one subscriber.

27. A computer program product for receiving availability data, the computer program product comprising:
a computer readable storage medium having computer readable program code embodied in said medium, said computer readable program code comprising:
computer readable program code configured to request, at a second client device (320) associated with a user of a presence service provided by a presence server (340), availability data associated with the a data file stored at a first client device (310), the data file being associated with an availability indicator to be displayed at the second client device (320);
computer readable program code configured to receive the requested availability data at the second client device (320); and
computer readable program code configured to update the availability indicator associated with the data file responsive to the received availability data to visually indicate a current status of the data file on a display at the second client device (320).

## Patentansprüche

1. Verfahren zur Bereitstellung von Verfügbarkeitsdaten, umfassend:
Empfangen an einem Präsenzserver (340) von Verfügbarkeitsdaten, die mit einer Daten-Datei assoziiert sind, die in einer ersten Client-Einrichtung (310) gespeichert sind, wobei die Daten-Datei einen assoziierten Verfügbarkeitsindikator aufweist, der ausgebildet ist, um an mindestens einer zweiten Client-Einrichtung (320) angezeigt zu werden;
Speichern der empfangenen Verfügbarkeitsdaten in dem Präsenzserver (340); und
Verteilen der gespeicherten Verfügbarkeitsdaten an die mindestens eine zweite Client-Einrichtung (320), wobei der mit der Daten-Datei assoziierte Verfügbarkeitsindikator ausgebildet ist, um einen Status der Daten-Datei an einer Anzeige (315) an der zweiten Client-Einrichtung (320) anzuzeigen.

2. Verfahren nach Anspruch 1, außerdem umfassend:
Empfangen an dem Präsenzserver (340) eines Verfügbarkeitsdaten-Updates, das mit der Daten-Datei assoziiert ist; und
Verteilen des Verfügbarkeitsdaten-Updates an die mindestens eine zweite Client-Einrichtung (320), wobei der Verfügbarkeitsindikator ausgebildet ist, um eine Änderung des Status der Daten-Datei anzuzeigen.

3. Verfahren nach Anspruch 1, wobei auf das Speichern folgende Schritte folgen:
Empfangen einer Anfrage bezüglich der Verfügbarkeitsdaten von mindestens einer zweiten Client-Einrichtung (320); und
Authentifizieren der mindestens einen zweiten Client-Einrichtung (320), wobei das Verteilen außerdem das Verteilen der gespeicherten Verfügbarkeitsdaten an die mindestens eine zweite Client-Einrichtung (320) umfasst, wenn die mindestens eine zweite Client-Einrichtung (320) authentifiziert worden ist.

4. Verfahren nach Anspruch 3, welches außerdem das Speichern an dem Präsenzserver (340) von Informationen umfasst, die mit der mindestens einen zweiten Client-Einrichtung (320) assoziiert sind, wobei das Authentifizieren außerdem das Authentifizieren der mindestens einen zweiten Client-Einrichtung (320) auf Grundlage der gespeicherten Informationen umfasst, die mit der mindestens einen zweiten Client-Einrichtung (320) assoziiert sind.

5. Verfahren zur Bereitstellung von Verfügbarkeitsdaten, umfassend:
Bereitstellen für einen Präsenzserver (340) von Verfügbarkeitsdaten, die mit einer Daten-Datei assoziiert sind, die in einer ersten Client-Einrichtung (310) gespeichert ist, wobei der Präsenzserver (340) ausgebildet ist, um die Verfügbarkeitsdaten für mindestens einen Teilnehmer eines Präsenzdienstes bereitzustellen, der durch den Präsenzserver (340) bereitgestellt wird, und einen mit der Daten-Datei assoziierten Verfügbarkeitsindikator an einer Anzeige mindestens einer zweiten Client-Einrichtung (320) zu verändern, die mit dem mindestens einen Teilnehmer assoziiert ist.

6. Verfahren nach Anspruch 5, das außerdem das visuelle Assozüeren des Verfügbarkeitsindikators mit einem Benutzer umfasst, wobei das Assozüeren zwischen dem Verfügbarkeitsindikator und dem Benutzer auf der Anzeige (315) der mindestens einen zweiten Client-Einrichtung (320) dargestellt wird.

7. Verfahren nach Anspruch 6, wobei das Bereitstellen außerdem das Bereitstellen der Verfügbarkeitsdaten umfasst, die mit dem Verfügbarkeitsstatus der Daten-Datei unabhängig von einem Verfügbarkeitsstatus des Benutzers verbunden sind.

8. Verfahren nach Anspruch 5, wobei die Daten-Datei eine Textdatei, mindestens ein Bild und/oder ein Live-Video oder aufgezeichnetes Video umfasst.

9. Verfahren nach Anspruch 5, wobei die Verfügbarkeitsdaten eine Angabe umfassen, dass die Daten-Datei verfügbar, nicht verfügbar, neu, aufzeichnend und/oder aktualisiert ist.

10. Verfahren zum Empfangen von Verfügbarkeitsdaten, umfassend:
Anfordern an einer zweiten Client-Einrichtung (320), die mit einem Benutzer eines Präsenzdienstes assoziiert ist, der durch einen Präsenzserver bereitgestellt wird, von Verfügbarkeitsdaten, die mit einer Daten-Datei assoziiert sind, die an einer ersten Client-Einrichtung (310) gespeichert ist, wobei die Daten-Datei mit einem an der zweiten Client-Einrichtung (320) anzuzeigenden Verfügbarkeitsindikator assoziiert ist;
Empfangen der angeforderten Verfügbarkeitsdaten an der zweiten Client-Einrichtung (320) von dem Präsenzserver (340); und
Aktualisieren des Verfügbarkeitsindikators, der mit der Daten-Datei assoziiert ist, als Reaktion auf die empfangenen Verfügbarkeitsdaten, um einen aktuellen Status der Daten-Datei auf der Anzeige (315) an der zweiten Client-Einrichtung (320) visuell anzuzeigen.

11. Verfahren nach Anspruch 10, wobei der Benutzer einen zweiten Benutzer umfasst, wobei die Daten-Datei mit einem ersten Benutzer der ersten Client-Einrichtung (310) assoziiert ist, und wobei das Empfangen der angeforderten Verfügbarkeitsdaten außerdem das Empfangen der angeforderten Verfügbarkeitsdaten unabhängig von einem Verfügbarkeitsstatus des ersten Benutzers umfasst.

12. Verfahren nach Anspruch 10, wobei das Anfordern das Anmelden an einem Präsenzdienst an dem Präsenzserver (340) umfasst, um es der zweiten Client-Einrichtung (320) zu ermöglichen, jedes Mal Verfügbarkeitsdaten zu empfangen, wenn ein Status der Daten-Datei aktualisiert wird.

13. Verfahren nach Anspruch 10, wobei das Anfordern das Abfragen des Präsenzservers (340) nach aktuellen Verfügbarkeitsdaten umfasst, die mit der Daten-Datei an der ersten Client-Einrichtung (310) assoziiert sind.

14. Verfahren nach Anspruch 10, wobei die Daten-Datei eine Textdatei, mindestens ein Bild und/oder ein Live-Video oder aufgezeichnetes Video umfasst.

15. Verfahren nach Anspruch 10, wobei die Verfügbarkeitsdaten eine Angabe umfassen, dass die Daten-Datei verfügbar, nicht verfügbar, neu, aufzeichnend und/oder aktualisiert ist.

16. System (300) zur Bereitstellung von Verfügbarkeitsdaten, umfassend:
einen Präsenzserver (340), der ausgebildet ist, um Verfügbarkeitsdaten zu empfangen, die mit einer Daten-Datei assoziiert sind, die in einer ersten Client-Einrichtung (310) gespeichert ist, wobei die Daten-Datei einen assoziierten Verfügbarkeitsindikator aufweist, der ausgebildet ist, um auf mindestens einer zweiten Client-Einrichtung (320) angezeigt zu werden, die empfangenen Verfügbarkeitsdaten zu speichern und die gespeicherten Verfügbarkeitsdaten an die mindestens eine zweite Client-Einrichtung (320) zu verteilen, wobei der mit der Daten-Datei assoziierte Verfügbarkeitsindikator ausgebildet ist, um einen Status der Daten-Datei anzuzeigen.

17. System (300) nach Anspruch 16, wobei der Präsenzserver (340) außerdem ausgebildet ist, um ein Verfügbarkeitsdaten-Update zu empfangen, das mit der Daten-Datei assoziiert ist, und das Update an die mindestens eine zweite Client-Einrichtung (320) zu verteilen.

18. System (300) nach Anspruch 16, wobei der Präsenzserver (340) außerdem ausgebildet ist, um eine Anfrage von der mindestens einen zweiten Client-Einrichtung (320) bezüglich der Verfügbarkeitsdaten zu empfangen, die mindestens eine zweite Client-Einrichtung (320) zu authentifizieren und die gespeicherten Verfügbarkeitsdaten an die mindestens eine zweite Client-Einrichtung (320) zu verteilen, wenn die mindestens eine zweite Client-Einrichtung (320) authentifiziert worden ist.

19. System (300) nach Anspruch 16, wobei der Präsenzserver (340) außerdem ausgebildet ist, um Informationen zu speichern, die mit der mindestens einen zweiten Client-Einrichtung (320) assoziiert sind, und die mindestens eine zweite Client-Einrichtung (320) auf Grundlage der gespeicherten Informationen zu authentifizieren, die mit der mindestens einen zweiten Client-Einrichtung (320) assoziiert sind.

20. Erste Client-Einrichtung (310), die ausgebildet ist, um Verfügbarkeitsdaten bereitzustellen, umfassend:
einen Sender, der ausgebildet ist, um Verfügbarkeitsdaten, die mit einer Daten-Datei assoziiert sind, die an der ersten Client-Einrichtung (310) gespeichert ist, an einen Präsenzserver (340) zu übertragen, wobei der Präsenzserver (340) ausgebildet ist, um die Verfügbarkeitsdaten für mindestens einen Teilnehmer eines Präsenzdienstes bereitzustellen, der durch den Präsenzserver (340) bereitgestellt wird, und einen Verfügbarkeitsindikator zu verändern, der mit der Daten-Datei an einer Anzeige mindestens einer zweiten Fern-Client-Einrichtung (320) assoziiert ist, die mit dem mindestens einen Teilnehmer assoziiert ist.

21. Erste Client-Einrichtung (310) nach Anspruch 20, wobei der Sender außerdem ausgebildet ist, um die Verfügbarkeitsdaten zu übertragen, die mit dem Verfügbarkeitsstatus der Daten-Datei unabhängig von einem Verfügbarkeitsstatus eines Benutzers der ersten Client-Einrichtung (310) verbunden sind.

22. Erste Client-Einrichtung (310) nach Anspruch 20, wobei die erste Client-Einrichtung (310) eine tragbare elektronische Einrichtung umfasst.

23. Zweite Client-Einrichtung (320), die ausgebildet ist, um Verfügbarkeitsdaten zu empfangen, umfassend:
eine Senderschaltung, die ausgebildet ist, um Verfügbarkeitsdaten anzufordern, die mit einer Daten-Datei assoziiert sind, die an einer Fern-Einrichtung (310) gespeichert ist, die mit einem Benutzer eines Präsenzdienstes assoziiert ist, der durch einen Präsenzserver (340) bereitgestellt wird, wobei die Daten-Datei mit einem an der zweiten Client-Einrichtung (320) anzuzeigenden Verfügbarkeitsindikator assoziiert ist;
eine Empfängerschaltung, die ausgebildet ist, um die angeforderten Verfügbarkeitsdaten an der zweiten Client-Einrichtung (320) von dem Präsenzserver (340) zu empfangen; und
eine Update-Schaltung, die ausgebildet ist, um den mit der Daten-Datei assoziierten Verfügbarkeitsindikator als Reaktion auf die empfangenen Verfügbarkeitsdaten zu aktualisieren, um einen aktuellen Status der Daten-Datei auf einer Anzeige (315) der zweiten Client-Einrichtung (320) visuell anzuzeigen.

24. Zweite Client-Einrichtung (320) nach Anspruch 23, wobei die zweite Client-Einrichtung (320) eine tragbare elektronische Einrichtung umfasst.

25. Computerprogrammprodukt zur Bereitstellung von Verfügbarkeitsdaten, wobei das Computerprogrammprodukt Folgendes umfasst:
ein computerlesbares Speichermedium, das einen computerlesbaren Programmcode aufweist, der in dem Medium ausgeführt ist, wobei der computerlesbare Programmcode Folgendes umfasst:
einen computerlesbaren Programmcode, der ausgebildet ist, um an einem Präsenzserver (340) Verfügbarkeitsdaten zu empfangen, die mit einer Daten-Datei assoziiert sind, die in einer ersten Client-Einrichtung (310) gespeichert ist, wobei die Daten-Datei einen assoziierten Verfügbarkeitsindikator aufweist, der ausgebildet ist, um an mindestens einer zweiten Client-Einrichtung (320) angezeigt zu werden;
einen computerlesbaren Programmcode, der ausgebildet ist, um die empfangenen Verfügbarkeitsdaten an dem Präsenzserver (340) zu speichern; und
einen computerlesbaren Programmcode, der ausgebildet ist, um die gespeicherten Verfügbarkeitsdaten an die mindestens eine zweite Client-Einrichtung (320) zu verteilen, wobei der mit der Daten-Datei assoziierte Verfügbarkeitsindikator ausgebildet ist, um die Änderung des Status der Daten-Datei anzuzeigen.

26. Computerprogrammprodukt zur Bereitstellung von Verfügbarkeitsdaten, wobei das Computerprogrammprodukt Folgendes umfasst:
ein computerlesbares Speichermedium, das einen computerlesbaren Programmcode aufweist, der in dem Medium ausgeführt ist, wobei der computerlesbare Programmcode Folgendes umfasst:
einen computerlesbaren Programmcode, der ausgebildet ist, um Verfügbarkeitsdaten, die mit einer Daten-Datei assoziiert sind, die in einer ersten Client-Einrichtung (310) gespeichert ist, für einen Präsenzserver (340) bereitzustellen, wobei der Präsenzserver (340) ausgebildet ist, um die Verfügbarkeitsdaten für mindestens einen Teilnehmer eines Präsenzdienstes bereitzustellen, der durch den Präsenzserver (340) bereitgestellt wird, und einen mit der Daten-Datei assoziierten Verfügbarkeitsindikator an einer Anzeige mindestens einer zweiten Client-Einrichtung (320) zu verändern, die mit dem mindestens einen Teilnehmer assoziiert ist.

27. Computerprogrammprodukt zum Empfangen von Verfügbarkeitsdaten, wobei das Computerprogrammprodukt Folgendes umfasst:
ein computerlesbares Speichermedium, das einen computerlesbaren Programmcode aufweist, der in dem Medium ausgeführt ist, wobei der computerlesbare Programmcode Folgendes umfasst:
einen computerlesbaren Programmcode, der ausgebildet ist, um an einer zweiten Client-Einrichtung (320), die mit einem Benutzer eines Präsenzdienstes assoziiert ist, der durch einen Präsenzserver (340) bereitgestellt wird, Verfügbarkeitsdaten anzufordern, die mit einer Daten-Datei assoziiert sind, die an einer ersten Client-Einrichtung (310) gespeichert ist, wobei die Daten-Datei mit einem an der zweiten Client-Einrichtung (320) anzuzeigenden Verfügbarkeitsindikator assoziiert ist;
einen computerlesbaren Programmcode, der ausgebildet ist, um die angeforderten Verfügbarkeitsdaten an der zweiten Client-Einrichtung (320) zu empfangen; und
einen computerlesbaren Programmcode, der ausgebildet ist, um den mit der Daten-Datei assoziierten Verfügbarkeitsindikator als Antwort auf die empfangenen Verfügbarkeitsdaten zu aktualisieren, um einen aktuellen Status der Daten-Datei auf einer Anzeige an der zweiten Client-Einrichtung (320) visuell anzuzeigen.

## Revendications

1. Procédé de fourniture de données de disponibilité, comprenant :
recevoir, à un serveur de présence (340), des données de disponibilité associées à un fichier de données stocké dans un premier dispositif de client (310), le fichier de données ayant un indicateur de disponibilité associé configuré pour être affiché sur au moins un deuxième dispositif de client (320),
stocker les données de disponibilité reçues dans le serveur de présence (340), et
diffuser les données de disponibilité stockées à l'au moins un deuxième dispositif de client (320), l'indicateur de disponibilité associé au fichier de données étant configuré pour indiquer un état du fichier de données sur un moyen d'affichage (315) au deuxième dispositif de client (320).

2. Procédé selon la revendication 1, comprenant en outre :
recevoir, au serveur de présence (340), une mise à jour des données de disponibilité associées au fichier de données et
diffuser la mise à jour des données de disponibilité à l'au moins un deuxième dispositif de client (320), l'indicateur de disponibilité étant configuré pour indiquer un changement d'état du fichier de données.

3. Procédé selon la revendication 1, **caractérisé en ce que** le stockage est suivi de :
recevoir une demande, de l'au moins un deuxième dispositif de client (320), de données de disponibilité et
authentifier l'au moins un deuxième dispositif de client (320), la diffusion comprenant en outre diffuser les données de disponibilité stockées à l'au moins un deuxième dispositif de client (320) si l'au moins un deuxième dispositif de client (320) a été authentifié.

4. Procédé selon la revendication 3, comprenant en outre stocker, dans le serveur de présence (340), des informations associées à l'au moins un deuxième dispositif de client (320), l'authentification comprenant en outre authentifier l'au moins un deuxième dispositif de client (320) sur la base des informations stockées associées à l'au moins un deuxième dispositif de client (320).

5. Procédé de fourniture de données de disponibilité, comprenant :
fournir, à un serveur de présence (340), des données de disponibilité associées à un fichier de données stocké dans un premier dispositif de client (310), le serveur de présence (340) étant configuré pour fournir les données de disponibilité à au moins un abonné d'un service de présence fourni par le serveur de présence (340) et changer un indicateur de disponibilité associé au fichier de données sur un moyen d'affichage d'au moins un deuxième dispositif de client (320) associé à l'au moins un abonné.

6. Procédé selon la revendication 5, comprenant en outre associer visuellement l'indicateur de disponibilité à un utilisateur, l'association de l'indicateur de disponibilité à l'utilisateur étant représentée sur un moyen d'affichage (315) de l'au moins un deuxième dispositif de client (320).

7. Procédé selon la revendication 6, **caractérisé en ce que** la fourniture comprend en outre fournir les données de disponibilité en rapport avec l'état de disponibilité du fichier de données indépendamment d'un état de disponibilité de l'utilisateur.

8. Procédé selon la revendication 5, **caractérisé en ce que** le fichier de données comprend un fichier de texte, au moins une image et/ou une vidéo directe ou enregistrée.

9. Procédé selon la revendication 5, **caractérisé en ce que** les données de disponibilité comprennent une indication que le fichier de données est disponible, indisponible, neuf, en train d'enregistrer et/ou mis à jour.

10. Procédé de réception de données de disponibilité, comprenant :
demander, sur un deuxième dispositif de client (320) associé à un utilisateur d'un service de présence fourni par un serveur de présence, des données de disponibilité associées à un fichier de données stocké dans un premier dispositif de client (310), le fichier de données étant associé à un indicateur de disponibilité destiné à être affiché sur le deuxième dispositif de client (320),
recevoir les données de disponibilité demandées dans le deuxième dispositif de client (320) en provenance du serveur de présence (340), et
mettre à jour l'indicateur de disponibilité associé au fichier de données en réponse aux données de disponibilité reçues pour indiquer visuellement un état actuel du fichier de données sur le moyen d'affichage (315) au deuxième dispositif de client (320).

11. Procédé selon la revendication 10, **caractérisé en ce que** l'utilisateur comprend un deuxième utilisateur, **en ce que** le fichier de données est associé à un premier utilisateur du premier dispositif de client (310) et **en ce que** recevoir les données de disponibilité demandées comprend en outre recevoir les données de disponibilité demandées indépendamment d'un état de disponibilité du premier utilisateur.

12. Procédé selon la revendication 10, **caractérisé en ce que** demander comprend s'abonner à un service de présence au serveur de présence (340) afin de permettre au deuxième dispositif de client (320) de recevoir des données de disponibilité chaque fois qu'un état du fichier de données est mis à jour.

13. Procédé selon la revendication 10, **caractérisé en ce que** demander comprend interroger le serveur de présence (340) concernant des données de disponibilité actuelles associées au fichier de données au premier dispositif de client (310).

14. Procédé selon la revendication 10, **caractérisé en ce que** le fichier de données comprend un fichier de texte, au moins une image et/ou une vidéo directe ou enregistrée.

15. Procédé selon la revendication 10, **caractérisé en ce que** les données de disponibilité comprennent une indication que le fichier de données est disponible, indisponible, neuf, en train d'enregistrer et/ou mis à jour.

16. Système (300) pour fournir des données de disponibilité, comprenant :
un serveur de présence (340) configuré pour recevoir des données de disponibilité associées à un fichier de données stocké dans un premier dispositif de client (310), le fichier de données ayant un indicateur de disponibilité associé configuré pour être affiché sur au moins un deuxième dispositif de client (320), stocker les données de disponibilité reçues et diffuser les données de disponibilité stockées à l'au moins un deuxième dispositif de client (320), l'indicateur de disponibilité associé au fichier de données étant configuré pour indiquer un état du fichier de données.

17. Système (300) selon la revendication 16, **caractérisé en ce que** le serveur de présence (340) est en outre configuré pour recevoir une mise à jour des données de disponibilité associées au fichier de données et diffuser la mise à jour à l'au moins un deuxième dispositif de client (320) .

18. Système (300) selon la revendication 16, **caractérisé en ce que** le serveur de présence (340) est en outre configuré pour recevoir une demande, de l'au moins un deuxième dispositif de client (320), de données de disponibilité, authentifier l'au moins un deuxième dispositif de client (320) et diffuser les données de disponibilité stockées à l'au moins un deuxième dispositif de client (320) si l'au moins un deuxième dispositif de client (320) a été authentifié.

19. Système (300) selon la revendication 16, **caractérisé en ce que** le serveur de présence (340) est en outre configuré pour stocker des informations associées à l'au moins un deuxième dispositif de client (320) et authentifier l'au moins un deuxième dispositif de client (320) sur la base des informations stockées associées à l'au moins un deuxième dispositif de client (320).

20. Premier dispositif de client (310) configuré pour fournir des données de disponibilité, comprenant :
un émetteur configuré pour transmettre à un serveur de présence (340), des données de disponibilité associées à un fichier de données stocké dans un premier dispositif de client (310), le serveur de présence (340) étant configuré pour fournir les données de disponibilité à au moins un abonné d'un service de présence fourni par le serveur de présence (340) et changer un indicateur de disponibilité associé au fichier de données sur un moyen d'affichage d'au moins un deuxième dispositif de client éloigné (320) associé à l'au moins un abonné.

21. Premier dispositif de client (310) selon la revendication 20, **caractérisé en ce que** l'émetteur est configuré en outre pour transmettre les données de disponibilité relatives à l'état de disponibilité du fichier de données indépendamment d'un état de disponibilité d'un utilisateur du premier dispositif de client (310).

22. Premier dispositif de client (310) selon la revendication 20, **caractérisé en ce que** le premier dispositif de client (310) comprend un dispositif électronique portable.

23. Deuxième dispositif de client (320) configuré pour recevoir des données de disponibilité, comprenant :
un circuit d'émetteur configuré pour demander des données de disponibilité associées à un fichier de données stocké dans un dispositif de client éloigné (310) associé à un utilisateur d'un service de présence fourni par un serveur de présence (340), le fichier de données étant associé à un indicateur de disponibilité destiné à être affiché sur le deuxième dispositif de client (320),
un circuit récepteur configuré pour recevoir les données de disponibilité demandées dans le deuxième dispositif de client (320) en provenance du serveur de présence (340), et
un circuit de mise à jour configuré pour mettre à jour l'indicateur de disponibilité associé au fichier de données en réponse aux données de disponibilité reçues pour indiquer visuellement un état actuel du fichier de données sur un moyen d'affichage (315) au deuxième dispositif de client (320).

24. Deuxième dispositif de client (320) selon la revendication 23, **caractérisé en ce que** le deuxième dispositif de client (320) comprend un dispositif électronique portable.

25. Produit de programme ordinateur pour fournir des données de disponibilité, le produit de programme ordinateur comprenant :
un moyen de stockage lisible par ordinateur ayant un code de programme lisible par ordinateur incorporé dans ledit moyen, le code de programme lisible par ordinateur comprenant :
un code de programme lisible par ordinateur configuré pour recevoir, dans un serveur de présence (340), des données de disponibilité associées à un fichier de données stocké dans un premier dispositif de client (310), le fichier de données ayant un indicateur de disponibilité associé configuré pour être affiché sur au moins un deuxième dispositif de client (320),
un code de programme lisible par ordinateur configuré pour stocker les données de disponibilité reçues dans le serveur de présence (340) et
un code de programme lisible par ordinateur configuré pour diffuser les données de disponibilité stockées à l'au moins un deuxième dispositif de client (320), l'indicateur de disponibilité associé au fichier de disponibilité étant configuré pour indiquer le changement d'état du fichier de données.

26. Produit de programme ordinateur pour fournir des données de disponibilité, le produit de programme ordinateur comprenant :
un moyen de stockage lisible par ordinateur ayant un code de programme lisible par ordinateur incorporé dans ledit moyen, le code de programme lisible par ordinateur comprenant :
un code de programme lisible par ordinateur configuré pour fournir à un serveur de présence (340) des données de disponibilité associées à un fichier de données stocké dans un premier dispositif de client (310), le serveur de présence (340) étant configuré pour fournir les données de disponibilité à au moins un abonné d'un service de présence fourni par le serveur de présence (340) et changer un indicateur de disponibilité associé au fichier de données sur un moyen d'affichage d'au moins un deuxième dispositif de client (320) associé à l'au moins un abonné.

27. Produit de programme ordinateur pour recevoir des données de disponibilité, le produit de programme ordinateur comprenant :
un moyen de stockage lisible par ordinateur ayant un code de programme lisible par ordinateur réalisé dans ledit moyen, le code de programme lisible par ordinateur comprenant :
un code de programme lisible par ordinateur configuré pour demander, sur un deuxième dispositif de client (320) associé à un utilisateur d'un service de présence fourni par un serveur de présence (340), des données de disponibilité associées à un fichier de données stocké dans un premier dispositif de client (310), le fichier de données étant associé à un indicateur de disponibilité destiné à être affiché sur le deuxième dispositif de client (320),
un code de programme lisible par ordinateur configuré pour recevoir les données de disponibilité demandées, dans le deuxième dispositif de client (320), et
un code de programme lisible par ordinateur configuré pour mettre à jour l'indicateur de disponibilité associé au fichier de données en réponse aux données de disponibilité reçues pour indiquer visuellement un état actuel du fichier de données sur un moyen d'affichage au deuxième dispositif de client (320).
